# EUROPEAN PATENT APPLICATION

(11) **EP 4 317 923 A1**
(43) Date of publication of application: **07.02.2024**
(21) Application number: 23163875.0
(22) Date of filing: 23.03.2023
(51) Int. Cl.: G01F 11/46

(54) **PORTABLE MILK POWDER CONTAINER**

(30) Priority: 02.08.2022 CN 202222011980 U
(71) Applicant: Shenzhen DeOne Innovation Technology Co., Ltd, Shenzhen, Guangdong 518129 (CN)
(72) Inventor: Cai, Jiongjun, Shenzhen 518129 (CN)
(74) Representative: Lin Chien, Mon-Yin

(57) **Abstract**

The portable milk powder container includes a milk powder container body, a dispensing mechanism, a milk powder taking bin, and a bottom cover. The milk powder container body is rotatably connected to the dispensing mechanism around a central axis of the portable milk powder container. The dispensing mechanism is detachably connected to the milk powder taking bin. The bottom cover is detachably arranged on a bottom portion of the milk powder container body. By rotating the milk powder taking bin, the dispensing mechanism is made to rotate relative to the milk powder container body, so milk powder in the milk powder container body is guided into the milk powder taking bin according to the required amount, which realizes the measurement of the milk powder and the dispensing of the milk powder, and thus making the portable milk powder convenient and fast to use.

## Description

### TECHNICAL FIELD

The present disclosure relates to a technical field of baby products, and in particular to a portable milk powder container.

### BACKGROUND

When taking infants out, milk powder, as a main food for infants, becomes an item that parents must carry to solve their infants' dietary problems. Large milk powder cans are generally inconvenient to carry, so there are convenient milk powder dispensers on the market, which are made up of multiple layers of separate boxes stacked and screwed together. Before going out, the parents can dispense the milk powder needed each time into different boxes. When the parents need to prepare the milk, the divided milk powder is poured out of a corresponding box for further brewing. These milk powder dispensers solve a problem that the large milk powder is inconvenient to carry. However, it is cumbersome and time consuming to use the milk powder dispensers.

Therefore, how to provide a portable milk powder container that is convenient and fast to use is a pressing problem for those skilled in the art.

### SUMMARY

In view of this, the present disclosure provides a portable milk powder container. By rotating a milk powder taking bin, a dispensing mechanism is made to rotate relative to a milk powder container body, and then milk powder in the milk powder container body is guided into the milk powder taking bin according to a required amount, which realizes measurement of the milk powder and dispensing of the milk powder, and thus making the portable milk powder convenient and fast to use.

The present disclosure provides the portable milk powder container. The portable milk powder container comprises a milk powder container body, a dispensing mechanism, a milk powder taking bin, and a bottom cover. The milk powder container body is rotatably connected to the dispensing mechanism around a central axis of the portable milk powder container. The dispensing mechanism is detachably connected to the milk powder taking bin. The bottom cover is detachably arranged on a bottom portion of the milk powder container body.

Furthermore, the bottom portion of the milk powder container body defines an opening. A top portion of the milk powder container body defines a first powder falling portion.

Furthermore, the dispensing mechanism comprises a rotating cover, a powder dispensing plate, and a shifting rod. The powder dispensing plate is arranged on a top portion of an inner side of the milk powder container body. The shifting rod is arranged on a surface of the powder dispensing plate. A bottom portion of the shifting rod is fit with the surface of the powder dispensing plate. The rotating cover is arranged on a top portion of an outer side of the milk powder container body. A central portion of the rotating cover is detachably connected to a central portion of the powder dispensing plate, so that the rotating cover drives the powder dispensing plate to rotate around the central axis of the portable milk powder container.

Furthermore, the rotating cover defines a second powder falling portion. The powder dispensing plate defines a third powder falling portion. An area of the second powder falling portion does not overlap with an area of the third powder falling portion.

Furthermore, the area of the third powder falling portion is not less than an area of the first powder falling portion.

Furthermore, the rotating cover, the powder dispensing plate, and the shifting rod are connected by a fastener. One end of the fastener limiting the powder dispensing plate defines a rod arranged along a central axis of the powder dispensing plate.

Furthermore, a length of the rod is no more than a length of the milk powder container body.

Furthermore, a bulge is arranged on one end of the shifting rod. A side wall of the milk powder container body defines a groove corresponding to a position of the one end of the shifting rod. The bulge is embedded in the groove.

Furthermore, the milk powder taking bin comprises a bin body and a bin cover. A bottom portion of the bin body is screwed with the dispensing mechanism. A powder outlet is defined on a top portion of the bin body. The bin cover is connected to and covered on the powder outlet.

Furthermore, a viewing window is arranged on the bin body.

Compared with the prior art, in the present disclosure, by placing a certain amount of the milk powder in the bottom portion of the milk powder container body in advance, when the milk powder needs to be dispensed for brewing, the portable milk powder container is turned upside down. Then, by rotating the milk powder taking bin, the dispensing mechanism is made to rotate relative to the milk powder container body, so the milk powder in the milk powder container body is guided into the milk powder taking bin according to the required amount, which realizes the measurement of the milk powder and the dispensing of the milk powder, and thus making the portable milk powder convenient and fast to use.

### BRIEF DESCRIPTION OF DRAWINGS

FIG. 1 is a schematic diagram of a portable milk powder container of the present disclosure.
FIG. 2 is a cross-sectional schematic diagram of the portable milk powder container shown in FIG. 1.
FIG. 3 is an exploded schematic diagram of the portable milk powder container shown in FIG. 1.
FIG. 4 is a schematic diagram of a milk powder container body of the portable milk powder container of the present disclosure.

### DETAILED DESCRIPTION

To facilitate a better understanding of purposes, structures, features, and efficacy of the present disclosure, a portable milk powder container of the present disclosure is further described in conjunction with the accompanying drawings and specific embodiments.

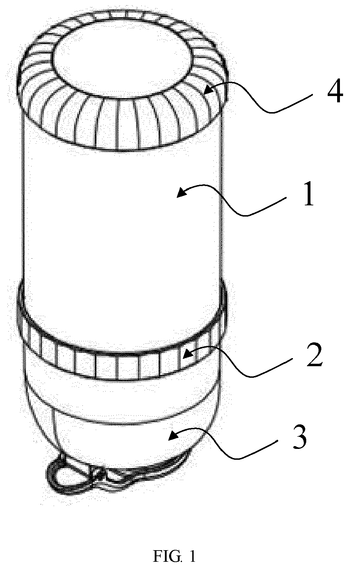

As shown in FIGS. 1-3, the present disclosure provides the portable milk powder container. The portable milk powder container comprises a milk powder container body 1, a dispensing mechanism 2, a milk powder taking bin 3, and a bottom cover 4. The milk powder container body 1 is rotatably connected to the dispensing mechanism 2 around a central axis of the portable milk powder container. The dispensing mechanism 2 is detachably connected to the milk powder taking bin 3. The bottom cover 4 is detachably arranged on a bottom portion of the milk powder container body 1.

In the embodiment, the milk powder container body 1 is a cylindrical structure having an opening at the bottom portion thereof. The dispensing mechanism 2 and the bottom cover 4 are disc-shaped structures. The milk powder taking bin 3 is a semi-capsule-shaped structure having a powder outlet at a bottom portion thereof. A diameter of the milk powder container body 1, a diameter of the dispensing mechanism 2, a diameter of the bottom cover 4, and a diameter of the milk powder taking bin 3 are the same. A central axis of the milk powder container body 1, a central axis of the dispensing mechanism 2, a central axis of the bottom cover 4, and a central axis of the milk powder taking bin 3 are overlapped.

The milk powder container body 1 is rotatably connected to the dispensing mechanism 2 around the central axis thereof. The top portion of the milk powder container body 1 is embedded in the dispensing mechanism 2. The milk powder container body 1 is rotatable to a left or to a right relative to the dispensing mechanism 2 around the central axis thereof. An outer side of a bottom portion of the milk powder taking bin 3 defines first threads, and an inner side of a top portion of the dispensing mechanism 2 defines second threads. The milk powder taking bin 3 is connected to the dispensing mechanism 2 by the first threads and the second threads. Of course. In other embodiments, the milk powder taking bin 3 and the dispensing mechanism 2 can be connected by other means. For example, the milk powder taking bin 3 may be snapped on the dispensing mechanism 2, which is not limited thereto. An inner wall of the bottom cover 4 defines third threads and an outer side of the bottom portion of the milk powder container body 1 defines fourth threads. The bottom cover 4 is connected to the powdered milk body 1 by the third threads and the fourth threads. Of course, in other embodiments, the bottom cover 4 can be connected to the milk powder container body 1 by other means. For example, one end of the bottom cover 4 may be snapped on the milk powder container body 1, which not limited thereto. When using the portable milk powder container, a certain amount of milk powder is placed in the bottom portion of the milk powder container body 1 in advance. When the milk powder needs to be dispensed for brewing, the portable milk powder container is turned upside down. Then, by rotating the milk powder taking bin 3, the dispensing mechanism 2 is made to rotate relative to the milk powder container body 1, so the milk powder in the milk powder container body 1 is guided into the milk powder taking bin 3 according to the required amount, which realizes the measurement of the milk powder and the dispensing of the milk powder, and thus making the portable milk powder convenient and fast to use.

As shown in FIGS. 1-4, the bottom portion of the milk powder container body 1 defines the opening. The top portion of the milk powder container body 1 defines a first powder falling portion 110.

In the embodiment, the first powder falling portion 110 is formed by hollowing a portion formed by rotating on a plane of the top portion of the milk powder container body 1 along a circumference direction at a certain angle with a certain radial axis. That is, the first powder falling portion 110 is a fan-shaped hollow structure with a vertex that is an intersection of the central axis of the portable milk powder container and the plane of the top portion of the milk powder container body 1. In the embodiment, one first powder falling portion 110 is provided. Of course, in other embodiments, two, three, five, or more first powder falling portion110 may be provided, which is not limited thereto. When a plurality of first powder falling portions 110 are provided, the plurality of first powder falling portions 110 may be equally spaced or unequally spaced on the surface of the top of the milk powder container body 1.

As shown in FIGS. 1-3, the dispensing mechanism 2 comprises a rotating cover 21, a powder dispensing plate 22, and a shifting rod 23. The powder dispensing plate 22 is arranged on a top portion of an inner side of the milk powder container body 1. The shifting rod 23 is arranged on a surface of the powder dispensing plate 22. The bottom portion of the shifting rod 23 is in clearance fit with the surface of the powder dispensing plate 22. The rotating cover 21 is arranged on a top portion of an outer side of the milk powder container body 1. A central portion of the rotating cover 21 is detachably connected to a central portion of the powder dispensing plate 22, so that the rotating cover 21 drives the powder dispensing plate 22 to rotate around the central axis of the portable milk powder container.

In the embodiment, the powder dispensing plate 22 is parallel to the plane of the top portion of the milk powder container body 1. The central portion of the shifting rod 23 defines a through hole. The shifting rod 23 is connected to the central portion of the powder dispensing plate 22 by a fastener 24. The bottom portion of the shifting rod 23 is in clearance fit with the surface of the powder dispensing plate 22. The rotating cover 21 is arranged on the top portion of the outer side of the milk powder container body 1. The rotating cover 21 is parallel to the plane of the top portion of the milk powder container body 1. The central portion of the rotating cover 21 is connected to the central portion of the powder dispensing plate 22 by the fastener 24. When the rotating cover 21 is rotated, the rotating cover 21 drives the powder dispensing plate 22 to rotate around the central axis of the portable milk powder container synchronously, so that the milk powder in the milk powder container body 1 is introduced into the milk powder taking bin 3 according to the required amount, which is simple and easy to operate.

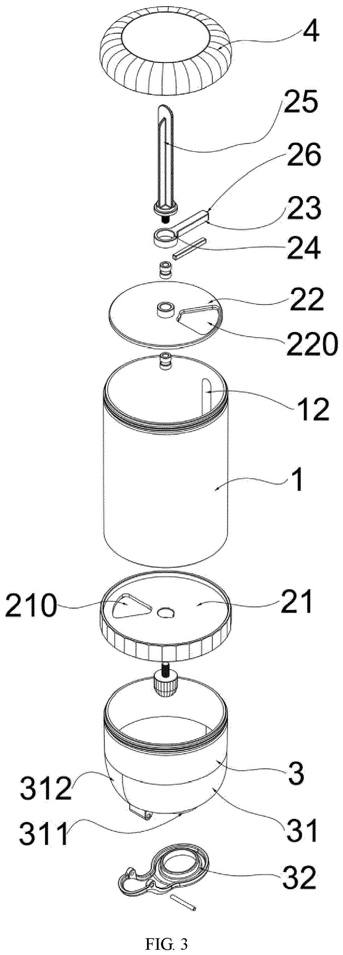

As shown in FIGS. 1 and 3, the rotating cover 21 defines a second powder falling portion 210. The powder dispensing plate 22 defines a third powder falling portion 220. An area of the second powder falling portion 210 does not overlap with an area of the third powder falling portion 220.

In the embodiment, the second powder falling portion 210 is formed by hollowing a portion formed by rotating on the rotating cover 21 along the circumference direction at a certain angle with a certain radial axis. That is, the second powder falling portion 210 is a fan-shaped hollow structure with a vertex that is an intersection of the central axis of the portable milk powder container and the rotating cover 21. Similarly, the third powder falling portion 220 is formed by hollowing a portion formed by rotating on the powder dispensing plate 22 along the circumference direction at a certain angle with a certain radial axis. That is, the third powder falling portion 220 is a fan-shaped hollow structure with a vertex that is an intersection of the central axis of the portable milk powder container and the powder dispensing plate 22. The area of the second powder falling portion 210 does not overlap with the area of the third powder falling portion 220. The first powder falling portion 110 and the rotating cover 21 form a dispensing grid. The rotating cover 21 drives the powder dispensing plate 22 to rotate synchronously around the central axis of the portable milk powder container when the rotating cover 21 is rotated relative to the milk powder container body 1. When the area of the third powder falling portion 220 overlaps with the area of the first powder falling portion 110, the milk powder falls into the dispensing grid formed by the first powder falling portion 110 and the rotating cover 21. When the area of the third powder falling portion 220 is not overlapped with the area of the first powder falling portion 110, the milk powder is prevented from falling into the dispensing grid, and the dispensing of the milk powder is completed.

When the area of the second powder falling portion 210 is rotated to overlap with the area of the first powder falling portion 110, the dispensed milk powder is discharged from the second powder falling portion 210. The area of the second powder falling portion 210 is not overlapped with the area of the third powder falling portion 220, so that when the rotating cover 21 is rotated relative to the milk powder container body 1, the milk powder is firstly fallen into the dispensing grid formed by the first powder falling portion 110 and the rotating cover 21, from the third powder falling portion 220, to complete dosing of the milk powder, which prevents the milk powder from directly falling from the second powder falling portion 210.

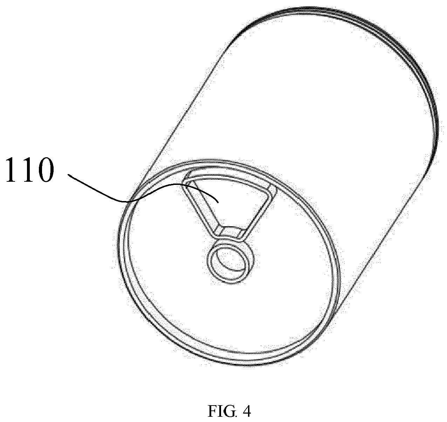

As shown in FIGS. 3 and 4, the area of the third powder falling portion 220 is not less than an area of the first powder falling portion 110.

In the embodiment, the area of the third powder falling portion 220 is greater than or equal to the area of the first powder falling portion 110, which ensures that the milk powder can fill the dispensing grid formed by the first powder falling portion 110 and the rotating cover 21, so that a weight of the milk powder in the dispensing grid is accurate.

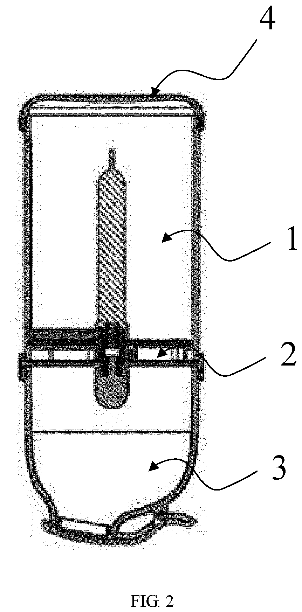

As shown in FIGS. 2 and 3, the rotating cover 21, the powder dispensing plate 22, and the shifting rod 23 are connected and limited by the fastener 24. One end of the fastener 24 limiting the powder dispensing plate defines a rod 25 arranged along the central axis of the powder dispensing plate 22. A length of the rod 25 is no more than a length of the milk powder container body 1.

In the embodiment, since the milk powder container body 1 has a certain length, there is a certain difficulty to limit the powder dispensing plate 22 arranged on the bottom portion of the milk powder container body 1. Therefore, by configuring the one end of the fastener 24 as the rod 25, when mounting the powder dispensing plate 22 and the shifting rod 23, the powder dispensing plate 22 and the shifting rod 23 are first sleeved on one end of the rod 25, then the powder distributing plate 22 and the shifting rod 23 are fixed to the bottom portion of the milk powder container body 1 through the rod 25, which make the portable milk powder container convenient to install and is time-saving and labor-saving.

As shown in FIGS. 2 and 3, a bulge 26 is arranged on one end of the shifting rod 23. A side wall of the milk powder container body 1 defines a groove 12 corresponding to a position of the one end of the shifting rod 23. The bulge 26 is embedded in the groove 12.

In the embodiment, the bulge 26 arranged on the one end of the shifting rod 23 is embedded in the groove 12 defined on the side wall of the milk powder container body 1, so that the shifting rod 23 is fixed relative to the bottom portion of the milk powder container body 1. The bottom portion of the shifting rod 23 is in clearance fit with the surface of the powder dispensing plate 22, so the shifting rod 23 effectively sweeps remaining milk powder on the bottom portion of the milk powder container body 1 into the dispensing grid, thereby reducing waste of the milk powder.

As shown in FIGS. 1-3, the milk powder taking bin 3 comprises a bin body 31 and a bin cover 32. A bottom portion of the bin body 31 is screwed with the dispensing mechanism 2. Of course, in other embodiments, the bottom portion of the bin body 31 and the dispensing mechanism 2 may be connected by other means. For example, two sides of the bin body 31 may be snapped to the dispensing mechanism 2, or a first side of the bin body 31 is connected to the dispensing mechanism 2 by a pin shaft, and a second side of the bin body 31 is snapped to the dispensing mechanism 2, etc., which is not limited thereto. A powder outlet 311 is defined on a top portion of the bin body. The bin cover 32 is connected to and covered on the powder outlet 311.

In the embodiment, an outer side of a bottom portion of the bin body 31 defines the first threads, and the inner side of the top portion of the dispensing mechanism 2 defines the second threads. The bin body 31 is connected to the dispensing mechanism 2 by the first threads and the second threads.

A rotating shaft is arranged on the bin body 31, a first end of the bin cover 32 is connected to the rotating shaft, and a second end of the bin cover 32 is snapped on the powder outlet defined on the top portion of the bin body. In one optional embodiment, a diameter of the powder outlet 311 is less than a diameter of an opening of a feeding bottle. When the bin cover is opened, a user can conveniently pour out the milk powder in the milk powder taking bin 3. When the bin cover 32 is closed, the milk powder in the milk powder taking bin 3 is effectively prevented from being damp or being polluted.

As shown in FIGS. 1-3, a viewing window 312 is arranged on the bin body 31.

In the embodiment, the viewing window 312 is arranged on the bin body 31, so that the user is able to observe the weight of the milk powder in the dispensing grid through the viewing window when using the portable milk powder container.

In summary, in the present disclosure, by placing a certain amount of the milk powder in the bottom portion of the milk powder container body in advance, when the milk powder needs to be dispensed for brewing, the portable milk powder container is turned upside down. Then, by rotating the milk powder taking bin, the dispensing mechanism is made to rotate relative to the milk powder container body, so the milk powder in the milk powder container body is guided into the milk powder taking bin according to the required amount, which realizes the measurement of the milk powder and the dispensing of the milk powder, and thus making the portable milk powder convenient and fast to use.

Foregoing descriptions are only optional embodiments of the present disclosure and are not intended to limit the present disclosure. Any modification, equivalent replacement made according to the specification and the drawings of the present disclosure should be included in the protection scope of the present disclosure.

## Claims

1. A portable milk powder container, comprising: a milk powder container body (1), a dispensing mechanism (2), a milk powder taking bin (3), and a bottom cover (4); wherein the milk powder container body (1) is rotatably connected to the dispensing mechanism (2) around a central axis of the portable milk powder container; the dispensing mechanism (2) is detachably connected to the milk powder taking bin (3); the bottom cover (4) is detachably arranged on a bottom portion of the milk powder container body (1).

2. The portable milk powder container according to claim 1, wherein the bottom portion of the milk powder container body (1) defines an opening; a top portion of the milk powder container body (1) defines a first powder falling portion (110).

3. The portable milk powder container according to claim 2, wherein the dispensing mechanism (2) comprises a rotating cover (21), a powder dispensing plate (22), and a shifting rod (23); the powder dispensing plate (22) is arranged on a top portion of an inner side of the milk powder container body (1); the shifting rod (23) is arranged on a surface of the powder dispensing plate (22); a bottom portion of the shifting rod (23) is in clearance fit with the surface of the powder dispensing plate (22); the rotating cover (21) is arranged on a top portion of an outer side of the milk powder container body (1); a central portion of the rotating cover (21) is detachably connected to a central portion of the powder dispensing plate (22), so that the rotating cover (21) drives the powder dispensing plate (22) to rotate around the central axis of the portable milk powder container.

4. The portable milk powder container according to claim 3, wherein the rotating cover (21) defines a second powder falling portion (210); the powder dispensing plate (22) defines a third powder falling portion (220); an area of the second powder falling portion (210) does not overlap with an area of the third powder falling portion (220).

5. The portable milk powder container according to claim 4, wherein the area of the third powder falling portion (220) is not less than an area of the first powder falling portion (110).

6. The portable milk powder container according to claim 3, wherein the rotating cover (21), the powder dispensing plate (22), and the shifting rod (23) are connected and limited by a fastener (24); one end of the fastener (24) limiting the powder dispensing plate (22) defines a rod (25) arranged along a central axis of the powder dispensing plate (22).

7. The portable milk powder container according to claim 6, wherein a length of the rod (25) is no more than a length of the milk powder container body (1).

8. The portable milk powder container according to claim 3, wherein a bulge (26) is arranged on one end of the shifting rod (23); a side wall of the milk powder container body (1) defines a groove (12) corresponding to a position of the one end of the shifting rod (23); the bulge (26) is embedded in the groove (12).

9. The portable milk powder container according to claim 1, wherein the milk powder taking bin (3) comprises a bin body (31) and a bin cover (32); a bottom portion of the bin body (31) is screwed with the dispensing mechanism (2); a powder outlet (311) is defined on a top portion of the bin body (31); the bin cover (32) is connected to and covered on the powder outlet (311).

10. The portable milk powder container according to claim 9, wherein a viewing window (312) is arranged on the bin body (31).
